# EUROPEAN PATENT APPLICATION

(11) **EP 4 703 431 A1**
(43) Date of publication of application: **04.03.2026**
(21) Application number: 24796642.7
(22) Date of filing: 19.03.2024
(51) Int. Cl.: C08L 83/07, C08L 83/05

(54) **CURABLE LIQUID SILICONE COMPOSITION AND CURED PRODUCT THEREOF**

(30) Priority: 28.04.2023 JP 2023074906
(71) Applicant: SHIN-ETSU CHEMICAL CO., LTD., Tokyo 1000005 (JP)
(72) Inventor: YUASA Shiho, Annaka-shi, Gunma 379-0224 (JP); HARA Hiroyasu, Annaka-shi, Gunma 379-0224 (JP)
(74) Representative: Mewburn Ellis LLP
(86) International application number: PCT/JP2024/010738
(87) International publication number: WO 2024/224884

(57) **Abstract**

This curable liquid silicone composition contains, in a specific ratio,
(A) a linear or branched diorganopolysiloxane having at least one alkenyl group in one molecule,
(B) a linear or branched organohydrogenpolysiloxane having a hydrogen atom bonded to at least two silicon atoms in one molecule,
(C) a platinum catalyst mixture containing a platinum catalyst and a phosphite ester compound in an amount of 0.5-3 mol with respect to 1 mol of platinum atoms, and
(D) a hydrolysis reaction catalyst.
This curable liquid silicone composition exhibits one-part storability at room temperature in a sealed container, is cured at room temperature by moisture in the atmosphere during use without being heated, and can become a silicone rubber cured product or a silicone gel cured product.

## Description

### TECHNICAL FIELD

This invention relates to a curable liquid silicone composition which exhibits one-package storability in a closed container at room temperature (23°C±15°C, the same holds true, hereinafter) and cures by airborne moisture at room temperature into a silicone rubber cured product (silicone elastomer) or silicone gel cured product, and a cured product thereof.

### BACKGROUND ART

Toward the goal of carbon neutrality until 2050, many companies are running attempts to use environment-friendly materials. Among others, thermosetting compositions involving the high-temperature heating step requiring vast energy, time and equipment need further improvements. For the purpose of readily using materials or preventing any mistakes at the use stage, there is a tendency of giving favor to one-package materials.

One-package materials which are curable without heating utilize crosslinking reaction which includes condensation reaction, UV radical reaction, and a special mode of addition reaction which is extremely reduced in storability and another mode of addition reaction in which the catalyst is activated with UV. Since these materials are unsatisfactory in deep-section cure or UV-dark-section cure in the curing step, their application is limited.

Among the techniques of crosslinking silicone compositions via addition reaction with the aid of platinum catalysts and curing them into rubber or gel, the techniques which aim to provide an uncured composition with one-package storability and a pot life and to cure at lower temperature are listed below.

JP 2722304 (Patent Document 1) proposes a method of adding an amine compound of ethylene diamine skeleton to a silicone composition which cures through crosslinking via addition reaction with the aid of a platinum catalyst.

JP 4530147 (Patent Document 2) proposes a method of using a catalyst which is obtained by heat aging a specific phosphite ester compound and a platinum catalyst.

However, the silicone compositions obtained from the above-mentioned methods undergo viscosity buildup or gelation when exposed at a temperature above 50°C for a long time. Their storage and transportation under low temperature conditions are essential for performance stability.

To solve the outstanding problems, WO 2022/050103 (Patent Document 3) proposes a one-package silicone composition comprising a branched organopolysiloxane of specific structure, an organohydrogenpolysiloxane, a platinum catalyst, and a specific phosphite triester compound. The composition exhibits stable state and properties even when exposed at a temperature in excess of 50°C for a long time. The composition, however, must be heated at about 100 to 160°C in order to cure the composition in a short time.

### PRIOR ART DOCUMENTS

### PATENT DOCUMENTS

- Patent Document 1:: JP 2722304
- Patent Document 2:: JP 4530147
- Patent Document 3:: WO 2022/050103
- Patent Document 4:: USP 3,220,972
- Patent Document 5:: USP 3,159,601
- Patent Document 6:: USP 3,159,662
- Patent Document 7:: USP 3,775,452
- Patent Document 8:: USP 4,510,094
- Patent Document 9:: USP 4,530,879

### SUMMARY OF INVENTION

### TECHNICAL PROBLEM

An object of the invention, which has been made under the above-mentioned circumstances, is to provide a curable liquid silicone composition which exhibits one-package storability in a closed container at room temperature and on use, cures by airborne moisture at room temperature, without need to heat, into a silicone rubber cured product or silicone gel cured product, and a cured product thereof.

### SOLUTION TO PROBLEM

Making extensive investigations to attain the above object, the inventors have found that a curable liquid silicone composition comprising a linear or branched diorganopolysiloxane having at least one alkenyl group per molecule, a linear or branched organohydrogenpolysiloxane having at least two silicon-bonded hydrogen atoms per molecule, a platinum catalyst mixture containing a platinum catalyst and a specific amount of a phosphite ester compound, and a hydrolytic reaction catalyst in a specific proportion exhibits one-package storability in a closed container at room temperature and on use, cures by airborne moisture at room temperature, without need to heat. The invention is predicated on this finding.

Since the curable liquid silicone composition cures by airborne moisture at room temperature, without need to heat, it is curable even in areas which are considered difficult to cure, like dark areas which are not exposed to UV, as left outstanding with UV-curable liquid silicone compositions.

Accordingly, the invention provides a curable liquid silicone composition which cures into a silicone rubber cured product (silicone elastomer) or silicone gel cured product, and a cured product thereof, as defined below.
[1] A curable liquid silicone composition comprising
   (A) a linear or branched diorganopolysiloxane having at least one alkenyl group per molecule,
   (B) a linear or branched organohydrogenpolysiloxane having at least two silicon-bonded hydrogen atoms per molecule, in such an amount as to provide 0.5 to 4 mol of silicon-bonded hydrogen in component (B) per mol of alkenyl group in component (A),
   (C) a platinum catalyst mixture containing a platinum catalyst and a phosphite ester compound, the amount of the phosphite ester compound being 0.5 to 3 mol per mol of platinum atom, in such an amount as to provide 0.1 to 1,000 ppm of platinum atom in component (C) based on the total weight of components (A) and (B), and
   (D) 0.01 to 3% by weight of a hydrolytic reaction catalyst based on the total weight of components (A) and (B).
[2] The curable liquid silicone composition of [1] which is of one package type.
[3] The curable liquid silicone composition of [1] or [2], further comprising (E) 0.01 to 5% by weight of a dehydrating agent based on the total weight of components (A) and (B).
[4] The curable liquid silicone composition of any one of [1] to [3], further comprising (F) a platinum catalyst compound adapted to be activated with UV in such an amount as to provide 0.1 to 1,000 ppm of platinum atom in component (F) based on the total weight of components (A) and (B).
[5] The curable liquid silicone composition of any one of [1] to [4], further comprising (G) 0.01 to 3% by weight of a photo-initiator based on the total weight of components (A) and (B).
[6] A cured product of the curable liquid silicone composition of any one of [1] to [5].

### ADVANTAGEOUS EFFECTS OF INVENTION

The curable liquid silicone composition of the present invention exhibits one-package storability in a closed container at room temperature and on use, cures by airborne moisture at room temperature, without need to heat. On use, the curable liquid silicone composition cures through the following mechanism. When the phosphite ester compound which has been functioning as an inhibitor to the platinum catalyst comes into contact with airborne moisture (water), it is hydrolyzed in the presence of a hydrolytic reaction catalyst into phosphonic acid which no longer functions as the inhibitor. Now that the platinum catalyst is activated, it can function as a hydrosilation addition reaction catalyst.

The curable liquid silicone composition has sufficient "one-package storability in a closed container at room temperature for a long time" to store and transport the composition at refrigerator to room temperature, but on use, it cures in air at room temperature without need to heat. The invention contributes to energy saving and the manufacture of parts and articles complying with the SDGs. By adding a platinum catalyst adapted to be activated with UV and irradiating UV in the curing step, the rate of curing reaction is increased so that the composition may be more effectively worked.

### BRIEF DESCRIPTION OF DRAWINGS

[FIG. 1] FIG. 1 is a schematic view showing how to irradiate UV in the measurement of shaded-area cure in Examples.
[FIG. 2] FIG. 2 is a schematic view showing evaluation sites in the measurement of shaded-area cure in Examples.

### DESCRIPTION OF EMBODIMENTS

Now the invention is described in detail.

### [Curable liquid silicone composition]

The invention provides a curable liquid silicone composition (specifically curable liquid silicone rubber composition or curable liquid silicone gel composition) comprising components (A) to (D) and optionally other components, as described below.

### [(A) Alkenyl-containing diorganopolysiloxane]

Component (A) is an alkenyl-containing diorganopolysiloxane, specifically a linear or branched diorganopolysiloxane having at least one alkenyl group per molecule, which functions as a main component or base polymer in the curable liquid silicone composition (also referred to as silicone composition, hereinafter). Generally it is a linear diorganopolysiloxane having the backbone composed basically of repeating diorganosiloxane units and blocked with a triorganosiloxy group at both ends of the molecular chain. It may also be a branched one containing a branch structure in some parts of the siloxane structure of the molecular chain.

The alkenyl-containing diorganopolysiloxane as component (A) contains at least one (generally 1 to 50) alkenyl group, preferably 1 to 20 alkenyl groups, more preferably 1 to 10 alkenyl groups, most preferably 1 or 2 alkenyl groups per molecule. Suitable alkenyl groups are often groups of 2 to 8 carbon atoms such as vinyl, allyl, propenyl, isopropenyl, butenyl, hexenyl, and cyclohexenyl. The alkenyl group may be bonded to the silicon atom at the end of the molecular chain or a silicon atom at a non-end position of the molecular chain (or midway the molecular chain). Preferably the diorganopolysiloxane contains at least an alkenyl group bonded to the silicon atom at the end (both ends) of the molecular chain. In this case, the alkenyl group may be present only at the end (both ends) of the molecular chain, or at the end (both ends) of the molecular chain and a non-end position of the molecular chain (or midway the molecular chain).

Exemplary of the alkenyl-containing diorganopolysiloxane is a linear diorganopolysiloxane having the general formula (1): 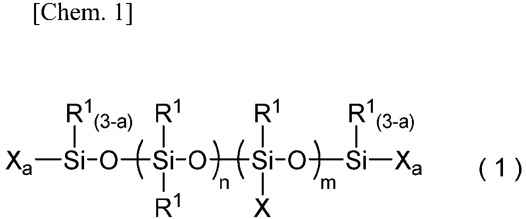 wherein R¹ is independently an unsubstituted or substituted monovalent hydrocarbon group free of aliphatic unsaturation, X is an alkenyl group, at least one alkenyl group being contained in the molecule, n is an integer of at least 0, m is an integer of at least 0, "a" is an integer of 0 to 3 independently for each silicon atom to which the group is attached, and at least one of "a" at both ends and m is an integer of at least 1.

In formula (1), the unsubstituted or substituted monovalent hydrocarbon groups free of aliphatic unsaturation, represented by R¹, are typically of 1 to 12 carbon atoms, preferably 1 to 10 carbon atoms, more preferably 1 to 6 carbon atoms. Examples thereof include alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl groups such as cyclopentyl, cyclohexyl, and cycloheptyl; aryl groups such as phenyl, tolyl, xylyl, naphthyl and biphenylyl; aralkyl groups such as benzyl, phenylethyl, phenylpropyl and methylbenzyl; and substituted forms of the foregoing groups in which some or all of the carbon-bonded hydrogen atoms are substituted by halogen atoms such as fluorine, chlorine and bromine, cyano or the like, e.g., chloromethyl, 2-bromoethyl, 3-chloropropyl, 3,3,3-trifluoropropyl, chlorophenyl, fluorophenyl, cyanoethyl, 3,3,4,4,5,5,6,6,6-nonafluorohexyl. Of these, unsubstituted or substituted alkyl groups of 1 to 3 carbon atoms such as methyl, ethyl, propyl, chloromethyl, bromoethyl, 3,3,3-trifluoropropyl, and cyanoethyl, and unsubstituted or substituted phenyl groups such as phenyl, chlorophenyl and fluorophenyl are preferred, with methyl and phenyl being more preferred.

In formula (1), examples of the alkenyl group X include those of 2 to 8 carbon atoms such as vinyl, allyl, propenyl, isopropenyl, butenyl, hexenyl, and cyclohexenyl. Inter alia, lower alkenyl groups such as vinyl and allyl are preferred.

In formula (1), n is an integer of at least 0, preferably 10 to 2,000, more preferably 50 to 1,200; and m is an integer of at least 0, preferably 0 to 40, more preferably 0 to 20. They are preferably integers meeting 10 ≤ n+m ≤ 2,000, more preferably 50 ≤ n+m ≤ 1,200, and 0 ≤ m/(n+m) ≤ 0.2. The units within the parentheses with n and m may be arranged randomly.

In formula (1), "a" is an integer of 0 to 3 independently for each silicon atom to which the group is attached, preferably 0 or 1.

Another example of the alkenyl-containing diorganopolysiloxane is a branched diorganopolysiloxane having formula (1), containing monofunctional siloxy units (XₐR¹₍₃₋ₐ₎SiO_{1/2} units) and difunctional siloxane units ((X)(R¹)SiO_{2/2} units and (R¹)₂SiO_{2/2} units) to constitute the molecule, and further containing a small amount of trifunctional siloxane units (i.e., silsesquioxane units (R¹)SiO_{3/2} or (X)SiO_{3/2}) to constitute branching points.

The alkenyl-containing diorganopolysiloxane preferably has a viscosity at 23°C of about 10 to about 1,000,000 mPa·s, more preferably about 100 to about 500,000 mPa·s.

Herein, the number of repetition (or degree of polymerization) of diorganosiloxane units per molecule may be determined typically as a number average molecular weight (or number average degree of polymerization) by gel permeation chromatography (GPC) versus polystyrene standards using toluene as the developing solvent. Also, the viscosity is typically measured at 23°C by a rotational viscometer, e.g., BL, BH, BS or cone-plate type viscometer or rheometer.

The alkenyl-containing diorganopolysiloxane as component (A) may be used alone or in admixture of two or more. To prevent the storability of the composition from fluctuating due to a difference in the water content of the composition, favorably the water content of the alkenyl-containing diorganopolysiloxane (A) is reduced prior to blending into the composition, for example, desirably by such means as heating and/or vacuum pumping.

### [(B) Organohydrogenpolysiloxane]

The organohydrogenpolysiloxane as component (B) is a linear or branched (branched or three-dimensional network structure, i.e., resinous structure) organohydrogenpolysiloxane having at least 2 (typically 2 to 200), preferably 2 to about 100 silicon-bonded hydrogen atoms (SiH groups) per molecule. It functions as a curing agent or crosslinking agent for the silicone composition.

Exemplary of the organohydrogenpolysiloxane is a linear or branched organohydrogenpolysiloxane having the average compositional formula (2):
[Chem. 2]

H_{b}R²_{c}SiO_{(4-b-c)/2} (2)

wherein R² is independently an unsubstituted or substituted monovalent hydrocarbon group free of aliphatic unsaturation, b and c are numbers in the range: 0.001 ≤ b ≤ 1.2, 0.8 ≤ c ≤ 2, and 0.8 < b+c ≤ 3, preferably 0.05 ≤ b ≤ 1, 1.2 ≤ c ≤ 2, and 1.5 ≤ b+c ≤ 2.7.

In formula (2), examples of the unsubstituted or substituted monovalent hydrocarbon group free of aliphatic unsaturation, represented by R², are as exemplified above for R¹ in formula (1). Examples thereof include those of 1 to 12 carbon atoms, preferably 1 to 10 carbon atoms, more preferably 1 to 7 carbon atoms. Specifically lower alkyl groups of 1 to 3 carbon atoms such as methyl, phenyl, and 3,3,3-trifluoropropyl are preferred.

Preferred as component (B) is an organohydrogenpolysiloxane having 2 to 300 silicon atoms, more preferably 3 to 150, even more preferably 3 to 100 silicon atoms per molecule and which is liquid at room temperature (23°C±15°C). It is noted that the silicon-bonded hydrogen atom may be positioned at an end of the molecular chain or a non-end (or midway) position of the molecular chain or both.

Examples of the organohydrogenpolysiloxane include 1,1,3,3-tetramethyldisiloxane, 1,1,3,3,5,5-hexamethyltrisiloxane, tris(dimethylhydrogensiloxy)methylsilane, tris(dimethylhydrogensiloxy)phenylsilane, molecular chain both end trimethylsiloxy-capped methylhydrogenpolysiloxane, molecular chain both end trimethylsiloxy-capped dimethyl-siloxane/methylhydrogensiloxane copolymers, molecular chain both end trimethylsiloxy-capped diphenylsiloxane/methylhydrogensiloxane copolymers, molecular chain both end trimethylsiloxy-capped methylphenylsiloxane/methylhydrogensiloxane copolymers, molecular chain both end trimethylsiloxy-capped dimethylsiloxane/diphenyl-siloxane/methylhydrogensiloxane copolymers, molecular chain both end dimethylhydrogensiloxy-capped dimethylpolysiloxane, molecular chain both end dimethylhydrogensiloxy-capped methylhydrogen-polysiloxane, molecular chain both end dimethylhydrogensiloxy-capped dimethylsiloxane/methylhydrogensiloxane copolymers, molecular chain both end dimethylhydrogensiloxy-capped diphenylsiloxane/methylhydrogensiloxane copolymers, molecular chain both end dimethylhydrogensiloxy-capped methylphenyl-siloxane/methylhydrogensiloxane copolymers, molecular chain both end dimethylhydrogensiloxy-capped dimethylsiloxane/diphenyl-siloxane/methylhydrogensiloxane copolymers, silicone resins of three-dimensional network structure which are composed of dimethylhydrogensiloxy units and SiO_{4/2} units and which may contain trimethylsiloxy units, dimethylsiloxane units, methylhydrogensiloxane units, hydrogensilsesquioxane units and/or methylsilsesquioxane units, and the foregoing compounds in which some or all of the methyl groups are replaced by other alkyl groups or phenyl groups.

The linear or branched organohydrogenpolysiloxane used herein may be prepared by any well-known methods, for example, by subjecting at least one chlorosilane selected from chlorosilanes having the general formulae: R²SiHCl₂ and R²₂SiHCl wherein R² is as defined above, to (co)hydrolytic condensation, or subjecting a mixture of the chlorosilane and at least one chlorosilane selected from chlorosilanes having the general formulae: R²₃SiCl and R²₂SiCl₂ wherein R² is as defined above, to cohydrolytic condensation. The organohydrogenpolysiloxane may also be one resulting from equilibration of the polysiloxane obtained from such (co)hydrolytic condensation.

The amount of the organohydrogenpolysiloxane blended as component (B) is such as to provide 0.5 to 4 mol, preferably 0.8 to 2.5 mol of silicon-bonded hydrogen (i.e., SiH group) in the organohydrogenpolysiloxane (B) per mol of alkenyl group in alkenyl-containing diorganopolysiloxane (A).

The organohydrogenpolysiloxane as component (B) may be used alone or in admixture. To prevent the storability of the silicone composition from fluctuating due to a difference in the water content of the composition, favorably the water content of the organohydrogenpolysiloxane (B) is reduced prior to blending into the composition, for example, desirably by such means as heating and/or vacuum pumping.

### [(C) Platinum catalyst mixture containing platinum catalyst and phosphite ester compound]

Component (C) is a platinum catalyst mixture containing a platinum catalyst and a phosphite ester compound wherein the phosphite ester compound inhibits the platinum catalyst from activation, and the amount of the phosphite ester compound is 0.5 to 3 mol per mol of platinum atom. On use of the silicone composition, the phosphite ester compound undergoes hydrolytic reaction with airborne water and turns to phosphonic acid which no longer functions as the inhibitor. Then the platinum catalyst is activated so as to function as a hydrosilation addition reaction catalyst.

The platinum catalyst used in component (C) is a platinum or platinum compound-containing catalyst which is commonly used in the prior art for promoting hydrosilation addition reaction. Examples thereof include elemental platinum (inclusive of platinum black); platinum chloride, chloroplatinic acid and chloroplatinic acid salts such as H₂PtCl₄·xH₂O, H₂PtCl₆·xH₂O, NaHPtCl₆·xH₂O, KHPtCl₆·xH₂O, Na₂PtCl₆·xH₂O, K₂PtCl₄·xH₂O, PtCl₄·xH₂O, PtCl₂, and Na₂HPtCl₄·xH₂O, wherein x is an integer of 0 to 6, preferably 0 or 6, alcohol-modified chloroplatinic acid (see Patent Document 4: USP 3,220,972), chloroplatinic acid/olefin complexes (see Patent Document 5: USP 3,159,601, Patent Document 6: USP 3,159,662, and Patent Document 7: USP 3,775,452), complexes of platinum chloride, chloroplatinic acid and chloroplatinic acid salts with vinyl-containing siloxanes, especially vinyl-containing cyclic siloxanes, and complexes of platinum with alcohols or vinyl-containing siloxanes.

The platinum catalyst is preferably used as solutions in such solvents as toluene, lower alcohols, higher alcohols, and silicones. The solution preferably has a platinum content or concentration of 0.1 to 2% by weight.

Exemplary of the phosphite ester compound used in component (C) is a compound having the general formula (3): 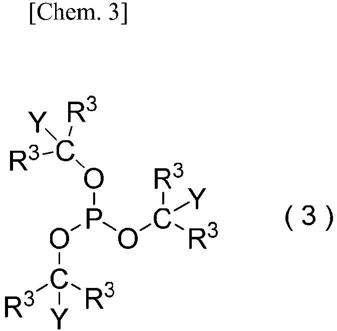 wherein R³ is independently a C₁-C₁₀ monovalent aliphatic hydrocarbon group and Y is independently hydrogen or methyl.

In formula (3), R³ is a C₁-C₁₀, preferably C₁-C₆ monovalent aliphatic hydrocarbon group. Examples include alkyl groups such as methyl, ethyl, propyl, isopropyl, butyl, isobutyl, tert-butyl, pentyl, hexyl, cyclohexyl, octyl and decyl; and alkenyl groups such as vinyl, allyl, propenyl, isopropenyl, butenyl, and isobutenyl. Aliphatic unsaturation-free monovalent hydrocarbon groups are preferred, alkyl groups are more preferred, and methyl, ethyl and propyl are most preferred. R³ may be the same or different.

In formula (3), Y is hydrogen or methyl, preferably hydrogen.

Examples of the phosphite ester compound having the structure of formula (3) include triisopropyl phosphite, tri(tert-butyl) phosphite, tri(sec-butyl) phosphite, tris(1-ethylpropyl) phosphite, tris(1-ethylbutyl) phosphite, and tris(1-propylbutyl) phosphite.

The amount of the phosphite ester compound added is 0.5 to 3 mol per mol of platinum atom in the platinum catalyst. If the amount of the phosphite ester compound is less than 0.5 mol per mol of platinum atom, its ability to control the platinum catalyst lowers and one-package storability at room temperature lowers. If the amount of the phosphite ester compound exceeds 3 mol per mol of platinum atom, which means that the phosphite ester compound which can coordinate with platinum atom is excessive, it takes a time until the platinum catalyst is activated and functions as a hydrosilation addition reaction catalyst, leading to a loss of moisture (or aerobic) curability. The preferred amount of the phosphite ester compound added is 0.8 to 2 mol, more preferably 1.0 to 1.3 mol per mol of platinum atom in the platinum catalyst.

The platinum catalyst mixture containing a platinum catalyst and a phosphite ester compound may be prepared in a nitrogen atmosphere at normal temperature (23°C) by mixing the platinum catalyst and the phosphite ester compound until uniform, and allowing the mixture to stand for at least 24 hours for aging. When the platinum catalyst mixture is prepared, it is desirable to dissolve the platinum catalyst and the phosphite ester compound in a solvent, if necessary, prior to use.

The amount of the platinum catalyst mixture (containing the platinum catalyst and the phosphite ester compound) blended as component (C) is to provide 0.1 to 1,000 ppm, preferably 1 to 300 ppm of platinum atom based on the total weight of components (A) and (B). If the amount of component (C) is too small, the silicone composition does not cure. If the amount of component (C) is too large, the probability that the activated platinum catalyst is present becomes high and the silicone composition shows a substantial loss of one-package storability.

### [(D) Hydrolytic reaction catalyst]

Component (D) is a hydrolytic reaction catalyst which promotes hydrolytic reaction of the phosphite ester compound in component (C). On use, the silicone composition cures through the following mechanism. In the presence of the hydrolytic reaction catalyst (D), the phosphite ester compound which has been functioning as an inhibitor to the platinum catalyst is hydrolyzed with airborne water (moisture) and converted to phosphonic acid which no longer functions as the inhibitor. Then the platinum catalyst is activated and functions as a hydrosilation addition reaction catalyst.

Exemplary of the hydrolytic reaction catalyst (D) are metal compounds including titanate esters such as tetra(isopropyl) titanate (TPT), tetrabutyl titanate (TBT), and tetra(2-ethylhexyl) titanate (TOT), titanium chelate compounds such as titanium diisopropoxybis(ethylacetoacetate) and titanium tetraacetylacetonate, and tin compounds such as dibutyldimethoxytin and dibutyltin dilaurate.

The amount of component (D) added is 0.01 to 3% by weight, preferably 0.01 to 1% by weight based on the total weight of components (A) and (B). If the amount is less than 0.01% by weight, the hydrolytic reaction catalyst effect is insufficient. If the amount exceeds 3% by weight, the silicone composition loses one-package storability at room temperature.

### [Other components]

In addition to the foregoing components (A) to (D), any optional components as shown below may be added to the curable liquid silicone composition, if necessary, as long as the objects of the invention are not impaired.

### [(E) Dehydrating agent]

To the curable liquid silicone composition, a dehydrating agent may be blended as component (E) for removing the water content in the silicone composition. With the dehydrating agent (E) blended, the composition acquires greater storability.

As mentioned above, the curable liquid silicone composition exhibits one-package storability in a closed container at room temperature and on use, cures by airborne moisture at room temperature, without need to heat. It is confirmed that when the water contents of components and the water content of the composition as mixed are reduced, the curable liquid silicone composition is improved in one-package storability. It is then effective for establishing one-package storability to introduce a means for consuming the water contents originating from the components stored in the closed container and a trace content of water entering from without the container, within the silicone composition, typically the dehydrating agent (E) for removing water.

The dehydrating agent as component (E) may be either inorganic or organic as long as the functions of components (A), (B), (C) and (D) are not impaired. It is noted that some dehydrating agents form by-products through dehydrating reaction, which can cause bubbling. Many dehydrating agents incur decomposition of the organohydrogenpolysiloxane (B) or lower the catalytic activity of the platinum catalyst in component (C).

Thus the dehydrating agent (E) is preferably selected from silyl ketenes (including silyl ketene acetals), silyl enol esters, and α-silyl esters, which enable efficient removal of water from within the system. Since these compounds have such a structure that by-products of dehydrating reaction do not detract from the functions of components (A), (B), (C) and (D) and are soluble in the silicone composition, the silicone composition remains stable. Inter alia, silyl ketenes (including silyl ketene acetals) and α-silyl esters do not incur decomposition of the organohydrogenpolysiloxane (B) or lower the catalytic activity of the platinum catalyst in component (C) because dehydrating reaction runs in non-basic conditions.

Examples of the silyl ketenes (including silyl ketene acetals) include 1-methoxy-2-methyl-1-(trimethylsiloxy)propene, dimethyl ketene trimethylsilyl acetal and tert-butoxy-1-(trimethylsiloxy)propene.

Examples of the α-silyl esters include ethyl 2-(trimethoxysilyl)propionate (ECMS) and octyl 2-(methyldimethoxysilyl)propionate (OCMS-2).

When the dehydrating agent (E) is blended, it may be pre-added to each component, added during preparation of the composition, or post-added to the prepared composition. When the dehydrating agent (E) is blended, its amount is preferably 0.01 to 5% by weight, more preferably 0.1 to 2% by weight based on the total weight of components (A) and (B). If the amount of component (E) is too large, changes of physical properties of a cured product at elevated temperature can be adversely affected.

It is noted that since the hydrolytic reaction catalyst (D) also promotes reaction of the dehydrating agent (E) with water, the dehydrating agent (E), if added, is effective for promoting not only the hydrolytic reaction of the phosphite ester compound, but also removal of water from within the system.

### [(F) Platinum catalyst compound to be activated with UV]

To the curable liquid silicone composition, a platinum catalyst compound adapted to be activated with UV may be blended as optional component (F), if necessary, for the purpose of increasing the curing reaction rate.

As mentioned above, the curable liquid silicone composition exhibits one-package storability in a closed container at room temperature and on use, cures by airborne moisture at room temperature, without need to heat. It takes about 1 week to reach full cure. Then, for increasing the curing reaction rate, it is useful to add a UV-activatable platinum catalyst compound (F). The setting is such that a region of the silicone composition which is directly exposed to UV is increased in curing reaction rate whereas a region of the silicone composition which is considered difficult to cure, typically a dark region of the silicone composition which is not exposed to UV, is subsequently cured.

Component (F) in the curable liquid silicone composition is a platinum catalyst which is activated with radiation of wavelength 200 to 500 nm, preferably UV of wavelength 200 to 400 nm. That is, it is a catalyst which is inactive in light-shielded conditions, but when irradiated with radiation of wavelength 200 to 500 nm, preferably UV of wavelength 200 to 400 nm, turns to a platinum catalyst (or hydrosilation addition reaction catalyst) which is active at room temperature, the catalyst being able to promote hydrosilation addition reaction between alkenyl group in component (A) and silicon-bonded hydrogen atom in component (B).

As the UV-activatable platinum catalyst compound (F), acetylacetonatoplatinum complexes and platinum cyclopentadienyl complexes as described in Patent Document 8: USP 4,510,094 and Patent Document 9: USP 4,530,879 are used.

Examples of component (F) include complexes of (η⁵-cyclopentadietnyl)tri-aliphatic platinum compounds. Inter alia, (cyclopentadienyl)platinum trimethyl complex and (methylcyclopentadienyl)platinum trimethyl complex are preferred.

Complexes of bis(β-diketonato)platinum compounds are also included, with bis(acetylacetonato)platinum complex being preferred.

When blended, the amount of the platinum catalyst compound (F) added is preferably to provide 0.1 to 1,000 ppm, more preferably 0.1 to 500 ppm, most preferably 0.1 to 50 ppm of platinum atom in component (F) based on the total weight of components (A) and (B). If the amount of component (F) blended is less than the range, the curing reaction rate may be insufficient or the silicone composition remains uncured under the influence of the surrounding cure inhibitory factors. If the amount is more than the range, sufficient storability may not be obtained.

Component (F) may be used alone or in admixture.

On use of component (F), if it is a solid catalyst, it may be used in the solid state, but is preferably used after it is dissolved in a suitable solvent such as toluene, xylene, ethyl acetate, 2-(2-butoxyethoxy)ethyl acetate because a more uniform cured product is obtainable. The solution preferably has a platinum atom content or concentration of 0.1 to 2% by weight.

### [(G) Photo-initiator]

In the curable liquid silicone composition, a photo-initiator as component (G) may be optionally blended for the purpose of reducing the ability of the phosphite ester compound to control the platinum catalyst in the platinum catalyst mixture (C).

As mentioned above, the curable liquid silicone composition cures through the mechanism that the phosphite ester compound is hydrolyzed with airborne water into a phosphonic acid which loses the ability to control the platinum catalyst and allows for curing. In the embodiment wherein the photo-initiator (G) is added, when UV radiation is irradiated, the photo-initiator generates radicals which combine with oxygen to form peroxy radicals with which the phosphite ester compound is oxidized and loses its ability to control the platinum catalyst.

The photo-initiator used as component (G) may be any of those initiators commonly used in UV-curable liquid silicone compositions. Examples include acetophenone, propiophenone, benzophenone, fluorene, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 2,2'-diethoxyacetophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl)ketone, benzylmethoxyketal, 2-chlorothioxanthone, diethylacetophenone, 1-hydroxycyclohexyl phenyl ketone, 2-methyl-1-[4-(methylthio)phenyl]-2-morpholin-1-one, 2-benzyl-2-dimethylamino-1-(4-morpholinophenyl)-butanone, 1-[4-(2-hydroxyethoxy)phenyl]-2-methyl-1-propan-1-one, 2,2-dimethoxy-2-phenylacetophenone, 2-hydroxy-2-methyl-1-phenylpropan-1-one, cyclohexyl phenyl ketone, and 2-hydroxy-2-methylpropiophenone.

When blended, the amount of the photoinitiator (G) added is preferably 0.01 to 3% by weight, more preferably 0.01 to 1% by weight, even more preferably 0.01 to 0.1% by weight based on the total weight of components (A) and (B). If the amount of component (G) is less than the range, there is a possibility that its addition effect is unavailable. If the amount of component (G) is more than the range, there is a possibility that sufficient storability is unavailable.

Besides the above-mentioned optional components such as dehydrating agent (E), UV-activatable platinum catalyst compound (F), and photo-initiator (G), other additives such as inorganic fillers, tackifiers, pigment pastes and reinforcing silicone resins may be added, if necessary, to the curable liquid silicone composition as long as the objects of the invention are not impaired.

The curable liquid silicone composition can be prepared by mixing the components (A) to (D) and optionally other components according to the standard technique, preferably by adding the alkenyl-containing diorganopolysiloxane (A), organohydrogenpolysiloxane (B), hydrolytic reaction catalyst (D), and platinum catalyst mixture (C) in the described order while mixing. It is noted that when the dehydrating agent (E) is blended, it is added after organohydrogen-polysiloxane (B) is added, and preferably it is added after hydrolytic reaction catalyst (D) is added, and with the container closed, the mixture is aged in nitrogen atmosphere at least overnight. When the UV-activatable platinum catalyst compound (F) and/or photo-initiator (G) is blended, preferably a shielded container is used and component (F) and/or (G) is added after the platinum catalyst mixture (C) is added.

For the curable liquid silicone composition, a tightly closed container capable of shutting off or reducing the entry of water, especially airborne water (or moisture) is used. Specifically when component (F) is used, a tightly sealed container capable of shielding UV and shutting off or reducing the entry of water, especially airborne water (or moisture) is suitable. When component (G) is used, a container capable of shielding UV and shutting off or reducing the entry of oxygen and water, especially airborne water (or moisture) and oxygen is suitable. The silicone composition stored in such a tightly closed container exhibits better one-package storability. The silicone composition can be distributed and marketed as a one-package curable liquid silicone composition.

On use, the curable liquid silicone composition cures by airborne water at room temperature into a silicone rubber cured product or silicone gel cured product. Specifically when component (F) is used, the composition is irradiated with UV so that a UV-irradiated region thereof is cured, and the composition is then exposed to air and brought into contact with airborne water (or moisture) at room temperature, whereby a dark region of the composition where no UV has reached is cured. When component (G) is used, the composition is irradiated with UV and then exposed to air and brought into contact with airborne water (or moisture) and oxygen at room temperature whereby the composition is cured.

In the embodiment wherein the curable liquid silicone composition contains the UV-activatable platinum catalyst compound (F) and/or photo-initiator (G), the UV irradiating method is to irradiate the silicone composition with UV at room temperature (23°C±15°C), desirably with UV of 200 to 500 nm at room temperature. When the silicone composition contains the platinum catalyst compound (F), after irradiation of UV, the platinum catalyst compound (F) in the UV-irradiated region is activated and functions as a hydrosilation addition reaction catalyst to promote hydrosilation addition reaction. The composition cured in this way. When the silicone composition contains the photo-initiator (G), upon irradiation of UV, the photo-initiator generates radicals which combine with airborne oxygen to form peroxy radicals which oxidize the phosphite ester compound. The platinum catalyst in component (C) is activated and functions as a hydrosilation addition reaction catalyst to promote hydrosilation addition reaction. The composition cured in this way.

The lamp for UV irradiation is not particularly limited as long as it supplies radiation of wavelength 200 to 500 nm. Exemplary are low-pressure mercury lamps, medium-pressure mercury lamps, high-pressure mercury lamps, xenon lamps, metal halide lamps, and ultraviolet LED lamps. The dose of UV, which varies with the type and amount of the platinum catalyst compound (F) and the photo-initiator (G), is preferably irradiation at a UV intensity of 10 to 1,000 mW/cm², especially 20 to 400 mW/cm² for about 0.1 second to 5 minutes, especially about 0.5 second to 1 minute.

Since the curable liquid silicone composition also has satisfactory cure in the dark region where UV does not reach, the silicone composition is advantageously used as a sealing agent, coating agent or liquid optically clear adhesive (LOCA) to parts of complex structure including many regions which remain dark when the silicone composition is cured with UV irradiation.

### EXAMPLES

Examples and Comparative Examples are shown below for illustrating the invention although the invention is not limited thereto. In Examples, the viscosity is measured at 23°C by a rotational viscometer, "parts" are by weight, and "room temperature" is 23°C.

### [Comparative Example 1 and Examples 1 to 4]

Curable liquid silicone compositions were prepared according to the following procedure.

### <Preparation of curable liquid silicone composition>

Each composition was prepared in nitrogen atmosphere at room temperature (23°C) by uniformly mixing the selected components shown in Table 1 in a brown glass bottle while keeping the bottle light-shielded and closed. It is noted that the molar ratio of SiH group in component (B) to vinyl group in component (A) was 1.1.

The components were added in the order of alkenyl-containing diorganopolysiloxane (A), organohydrogenpolysiloxane (B), dehydrating agent (E), hydrolytic reaction catalyst (D), and platinum catalyst mixture containing platinum catalyst and phosphite ester compound (C) while continuing mixing.

It is noted that when the dehydrating agent (E) was used, the procedure involves the steps of adding hydrolytic reaction catalyst (D), closing the brown glass bottle, aging the mixture (in the bottle) in nitrogen atmosphere at least overnight, and thereafter adding the platinum catalyst mixture containing platinum catalyst and phosphite ester compound (C). When not only the dehydrating agent (E) was used, but also the UV-activatable platinum catalyst compound (F) and/or the photo-initiator (G) was used, they were added after the step of adding the platinum catalyst mixture containing platinum catalyst and phosphite ester compound (C).

The components are identified below.
(A) Alkenyl-containing diorganopolysiloxane:
   Vinyl-containing branched dimethylpolysiloxane of the following average formula (4), having a viscosity at 23°C of 1,000 mPa·s 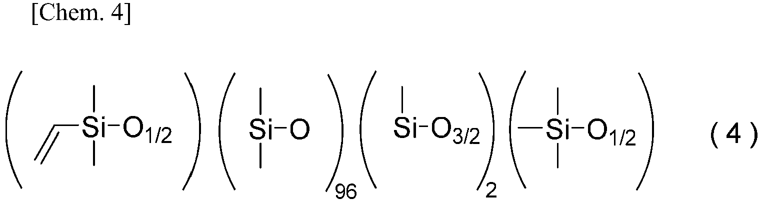
(B) Organohydrogenpolysiloxane:
   Linear methylhydrogenpolysiloxane of the following average formula (5), i.e., dimethylpolysiloxane capped with dimethylhydrogensiloxy groups at both ends of molecular chain 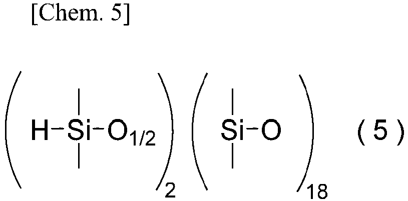
(C) Platinum catalyst mixture containing platinum catalyst and phosphite ester compound:
   A platinum catalyst mixture obtained by adding triisopropyl phosphite to a toluene solution of platinum/divinyltetramethyldisiloxane complex (Pt content 0.5 wt%) in nitrogen atmosphere, the amount of triisopropyl phosphite being 1.05 mol per mol of platinum atom
(D) Hydrolytic reaction catalyst:
   tetra(isopropyl) titanate (TPT)
(E) Dehydrating agent:
   ethyl 2-(trimethoxysilyl)propionate (ECMS) (α-silyl ester)
(F) UV-activatable platinum catalyst compound:
   toluene solution of (methylcyclopentadienyl)platinum trimethyl complex (Pt content 0.5 wt%)
(G) Photo-initiator:
   Darocure 1173 (2-hydroxy-2-methyl-propiophenone) by BASF Japan Co., Ltd.

The curable liquid silicone compositions prepared above were evaluated for cured body outer appearance, one-package storability in light-shielded, closed, room temperature conditions, moisture-cure (or aerobic cure) in light-shielded, air, room temperature conditions, and shaded-area cure upon UV exposure.

### [Cured body outer appearance]

The outer appearance of a cured body was evaluated by visual observation. The cured bodies of Examples and Comparative Examples looked colorless transparent to brown transparent. The results are shown in Table 1.

### [One-package storability (in light-shielded, closed, room temperature conditions)]

One-package storability was evaluated by filling the curable liquid silicone composition in a brown glass bottle in nitrogen atmosphere, closing the bottle, allowing the bottle to stand in air at room temperature, and observing the thickening or gelling behavior of the silicone composition. The thickening or gelling behavior of the composition was evaluated by tilting the bottle and observing how the composition flowed while following the tilting of the bottle. The silicone composition was judged thickened or gelled when the flow was poorer than immediately after closure. Observation was made every one week. The week when thickening or gelling was observed is reported in Table 1.

### [Moisture-cure (or aerobic cure) (in light-shielded, air, room temperature conditions)]

Moisture-cure was evaluated by filling the curable liquid silicone composition in a brown glass bottle in nitrogen atmosphere and closing the bottle. After the lapse of 3 hours, 9 g of the silicone composition was dispensed from the brown glass bottle to a glass dish with an inner diameter of 10 mm. The dish was covered with a piece of aluminum foil in air at room temperature for light shielding. The state of the silicone composition after 1 week was observed, with the results shown in Table 1.

### [Shaded-area cure upon UV exposure]

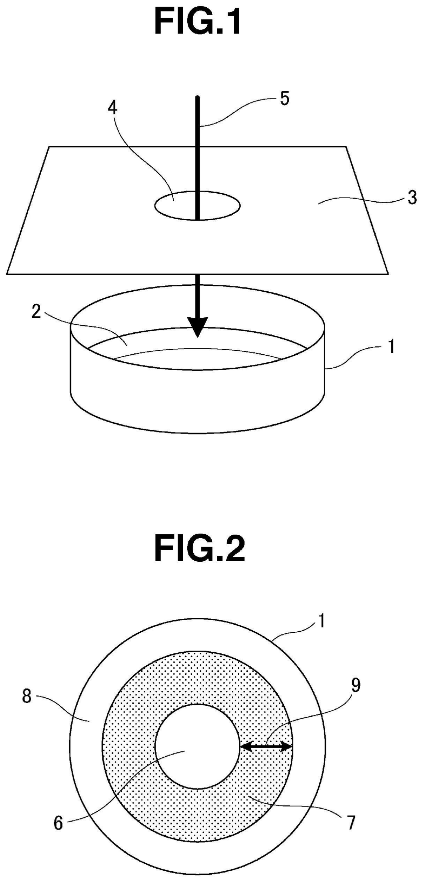

Each composition prepared above, 9 g, was admitted into a circular aluminum dish with an inner diameter of 60 mm to a thickness of about 3.2 mm. On the dish, a light-shielding plate having a concentric center hole (or empty space) of diameter 20 mm was rested. Using a UV irradiation system having a UV-LED lamp as the light source (CCS Inc.), UV radiation of wavelength 365 nm was irradiated to the composition at room temperature (23°C) in ambient air in a dose of 8,000 mJ/cm² whereby the composition was cured. The outline is illustrated in FIG. 1. Illustrated are an aluminum dish 1, a curable liquid silicone composition 2, and a light-shielding plate 3 having a hole (empty space) 4. UV is irradiated in a direction 5.

For each composition, after 10 minutes, 24 hours and 72 hours from UV irradiation, the liquid portion was taken off and the distance from the outer periphery of light-exposed region to the end of cured gel is the size of a cured portion in the shaded area. The outline is illustrated in FIG. 2. Illustrated are a cured portion 6 in the UV-exposed area (diameter 20 mm) where UV is directly irradiated, a cured portion 7 in the shaded area which is covered with the light-shielding plate and not irradiated with UV, and an uncured portion 8 in the shaded area which is covered with the light-shielding plate and not irradiated with UV. The cured portion 7 in the shaded area has a size 9. In this test, the maximum value of the shaded area cure size is 20 mm. The results are shown in Table 1.

**[Table 1]**

| Component (g) | | Comparative Example | Example | | | |
|---|---|---|---|---|---|---|
| | | 1 | 1 | 2 | 3 | 4 |
| (A) | | 23 | 23 | 23 | 23 | 23 |
| (B) | | 2 | 2 | 2 | 2 | 2 |
| (C) | | 0.075 | 0.075 | 0.075 | 0.075 | 0.075 |
| Pt content of (C) based on total of (A) and (B), ppm | | 15 | 15 | 15 | 15 | 15 |
| (D) | | | 0.03 | 0.03 | 0.03 | 0.03 |
| (E) | | | | 0.24 | 0.24 | 0.24 |
| (F) | | | | | 0.1 | 0.1 |
| (G) | | | | | | 0.003 |

| Test results | | | | | | |
|---|---|---|---|---|---|---|
| Cured body appearance | | colorless transparent | colorless transparent | brown transparent | brown transparent | brown transparent |
| One-package storability (in light-shielded, closed, room temperature conditions) | | 8 weeks | 8 weeks | 12 weeks | 12 weeks | 12 weeks |
| Moisture-cure (or aerobic cure) (1 week holding in light-shielded, air, room temperature conditions) | | uncured (liquid) | cured | cured | cured | cured |
| Shaded-area cure upon UV exposure | after 10 min | uncured (liquid) | uncured (liquid) | uncured (liquid) | cured in exposed area | cured in exposed area |
| | after 24 hr | | | | 3 mm | 5 mm |
| | after 72 hr | | | | 7 mm | 10 mm |

As is evident from the above-described results, the curable liquid silicone composition exhibits one-package storability in a closed container at room temperature. On use, it cures by airborne moisture at room temperature, without need to heat.

### REFERENCE SIGNS LIST

- 1: aluminum dish
- 2: curable liquid silicone composition
- 3: light-shielding plate
- 4: hole (empty space) in light-shielding plate (diameter 20 mm)
- 5: UV irradiating direction
- 6: UV exposed portion (diameter 20 mm)
- 7: cured portion in shaded area
- 8: uncured portion in shaded area
- 9: size of cured portion in shaded area

## Claims

1. A curable liquid silicone composition comprising
(A) a linear or branched diorganopolysiloxane having at least one alkenyl group per molecule,
(B) a linear or branched organohydrogenpolysiloxane having at least two silicon-bonded hydrogen atoms per molecule, in such an amount as to provide 0.5 to 4 mol of silicon-bonded hydrogen in component (B) per mol of alkenyl group in component (A),
(C) a platinum catalyst mixture containing a platinum catalyst and a phosphite ester compound, the amount of the phosphite ester compound being 0.5 to 3 mol per mol of platinum atom, in such an amount as to provide 0.1 to 1,000 ppm of platinum atom in component (C) based on the total weight of components (A) and (B), and
(D) 0.01 to 3% by weight of a hydrolytic reaction catalyst based on the total weight of components (A) and (B).

2. The curable liquid silicone composition of claim 1 which is of one package type.

3. The curable liquid silicone composition of claim 1, further comprising (E) 0.01 to 5% by weight of a dehydrating agent based on the total weight of components (A) and (B).

4. The curable liquid silicone composition of claim 1, further comprising (F) a platinum catalyst compound adapted to be activated with UV in such an amount as to provide 0.1 to 1,000 ppm of platinum atom in component (F) based on the total weight of components (A) and (B).

5. The curable liquid silicone composition of claim 1, further comprising (G) 0.01 to 3% by weight of a photo-initiator based on the total weight of components (A) and (B).

6. A cured product of the curable liquid silicone composition of any one of claims 1 to 5.
